(19) **Europäisches Patentamt**
European Patent Office
Office européen des brevets

(11) **EP 0 947 407 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(51) Int Cl.:
**B60T 8/17** (2006.01)

(21) Anmeldenummer: **98120969.5**

(22) Anmeldetag: **05.11.1998**

(54) **Vorrichtung und Verfahren zur Regelung wenigstens einer Fahrdynamikgrösse eines Fahrzeuges**

Device and procedure for controlling at least one vehicle travel dynamic value

Dispositif et procédé pour régler au moins une valeur dynamique de déplacement d'un véhicule

(84) Benannte Vertragsstaaten:
**DE FR GB IT SE**

(30) Priorität: **31.03.1998 DE 19814216**

(43) Veröffentlichungstag der Anmeldung:
**06.10.1999 Patentblatt 1999/40**

(73) Patentinhaber: **ROBERT BOSCH GMBH**
**70442 Stuttgart (DE)**

(72) Erfinder:
• **Lutz, Albert**
**71672 Marbach (DE)**
• **Gerdes, Manfred**
**71735 Eberdingen-Hochdorf (DE)**

(56) Entgegenhaltungen:
**DE-A- 4 340 921       DE-A- 19 537 439**
**DE-A- 19 619 985**

**Beschreibung**

Stand der Technik

Die Erfindung betrifft eine Vorrichtung und ein Verfahren zur Regelung wenigstens einer Fahrdynamikgröße eines Fahrzeuges, wobei der Kern der Erfindung in der Ansteuerung der Bremsanlage des Fahrzeuges und in der Bereitstellung der hierfür erforderlichen Vorrichtung liegt.

Vorrichtungen und Verfahren zur Regelung wenigstens einer Fahrdynamikgröße eines Fahrzeuges sind aus dem Stand der Technik in vielerlei Modifikationen bekannt. Beispielsweise sei hier auf die in der Automobiltechnischen Zeitschrift (ATZ) 96, 1994, Heft 11, auf den Seiten 674 bis 689 erschienenen Veröffentlichung "FDR - Die Fahrdynamikregelung von Bosch" verwiesen. Bei dieser Fahrdynamikregelung wird wenigstens ausgehend vom Lenkradwinkel und der Fahrzeuggeschwindigkeit jeweils ein Sollwert für den Schwimmwinkel bzw. die Giergeschwindigkeit des Fahrzeuges bestimmt. Die Sollwerte für den Schwimmwinkel bzw. die Giergeschwindigkeit werden zusammen mit den entsprechenden Istwerten einem Zustandsregler zugeführt, der aus den entsprechenden Regelabweichungen Fahrzeugsollgiermomente ermittelt. Diese Fahrzeugsollgiermomente werden unter Berücksichtigung der aktuellen Schlupfwerte in Sollschlupfänderungen an geeigneten Rädern umgerechnet. Die Sollschlupfänderungen werden durch die unterlagerten ABS- bzw. ASR-Radregler realisiert. Beispielsweise wird, wenn das Fahrzeug beim freien Rollen in einer Rechtskurve übersteuert und die Sollgiergeschwindigkeit überschritten wird, unter anderem am linken Vorderrad ein Sollbremsschlupf vorgegeben, wodurch eine nach links drehende Giermomentänderung auf das Fahrzeug wirkt, welche die zu große Giergeschwindigkeit abbaut. Im ungebremsten Fall oder wenn der Fahrervordruck nicht ausreicht, um den gewünschten Sollschlupf einzustellen, wird aktiv der Druck in den Bremskreisen erhöht.

Aus der DE 40 35 527 A1 (entspricht der US 5,205,623) ist eine hydraulische Bremsanlage mit Blockierschutzsystem (ABS) und Antriebsschlupfregelung (ASR) für Kraftfahrzeuge bekannt. Diese hydraulische Bremsanlage weist ein Hydroaggregat mit mindestens einem Steuerventil und einer Rückförderpumpe mit mindestens einem selbstansaugend ausgebildeten Pumpenelement auf, das in dem das mindestens eine Antriebsrad enthaltenen Bremskreis wirksam ist. Zur Bremsdruckbereitstellung bei ASR dient eine Ventilanordnung, bestehend aus jeweils einem Ladeventil und einem Umschaltventil. Das Umschaltventil ist in der vom Hauptbremszylinder zum Radbremszylinder des Antriebsrades führenden Verbindung und das Ladeventil in einer Saugleitung zwischen Pumpenelement und Bremsflüssigkeitsbehälter angeordnet. Zur Erzielung eines hydraulischen Leistungsbedarfes bei ASR wird die Ventilanordnung derart angesteuert, daß zum Druckaufbau das Umschaltventil sperrt und das Ladeventil geöffnet ist, zum Druckhalten beide Ventile sperren und zum Druckabbau das Ladeventil sperrt und das Umschaltventil geöffnet ist.

Bei den vorstehend beschriebenen, zum Stand der Technik gehörenden Vorrichtungen und Verfahren zur Regelung wenigstens einer Fahrdynamikgröße und den dabei verwendeten Bremsanlagen kann es bei einer fahrerunabhängigen Bremsenbetätigung, wie sie beispielsweise bei einem ASR-Eingriff vorliegt, in einem Bremskreis aufgrund der Ansteuerung der Kreisventile, d.h. des Umschaltventils und des Ladeventils, während der Ansteuerung dieser Ventile aufgrund des in den Bremskreis einfließenden Bremsmediums zu Druckspitzen kommen. Diese Druckspitzen sind bei einer großvolumigen Auslegung des Hydroaggregates unproblematisch. Soll jedoch ein kleinvolumiges Hydroaggregat verwendet werden, so können sich durch das einfließende Bremsmedium größere Druckspitzen ergeben, die aufgrund der daraus entstehenden großen Belastung für dieses Hydroaggregates nachteilig sind.

Eine gattungsgemäße Vorrichtung ist aus dem Dokument DE 19537439 bekannt.

Die Aufgabe der vorliegenden Erfindung besteht folglich darin, eine Vorrichtung bzw. ein Verfahren bereitzustellen, mit dessen Hilfe bei fahrerunabhängigen Bremseneingriffen große Druckspitzen im Hydroaggregat vermieden werden und somit die Belastung des Hydroaggregats reduziert wird. Dadurch können auch kleinvolumigere Hydroaggregate eingesetzt werden.

Vorteile der Erfindung

Die vorstehend beschriebenen, bei der Durchführung eines fahrerunabhängigen Bremseneingriffes entstehenden Druckspitzen sind bei großvolumigen Hydroaggregaten unproblematisch. Sollen jedoch kleinvolumige Hydroaggregate entsprechend betrieben werden, so muß das Hydroaggregat durch den entsprechenden Regler so angesteuert werden, daß diese Druckspitzen nicht oder nur in reduzierter Stärke auftreten, die volle Leistungsfähigkeit der Regelung jedoch gewahrt bleibt.

Die Erfindung löst die oben genannte Aufgabe durch die Merkmale der unabhängigen Ansprüche 1 und 7.

Die der Erfindung zugrundeliegende Bremsanlage enthält einen Vorratsbehälter zur Aufnahme von Bremsmedium und wenigstens einen Bremskreis. Der Bremskreis enthält ausgangsseitig erste Ventilanordnungen und eingangsseitig eine zweite Ventilanordnung. An die ersten Ventilanordnungen sind dem Bremskreis zugeordnete Radbremszylinder angeschlossen. Der Vorratsbehälter steht mit der zweiten Ventilanordnung in Verbindung. Die erste Ventilanordnung besteht jeweils aus einem ersten und einem zweiten Ventil. Ferner enthält der Bremskreis eine Pumpe. Die zweite Ventilanordnung besteht aus einem ersten Ventil, durch welches in Durchlaßstellung bei Betätigung der Pumpe Bremsmedium in den Bremskreis hineinfließt und aus einem zweiten Ventil, durch welches in Durchlaßstellung bei Betätigung der Pumpe Bremsmedium aus dem Bremskreis herausfließt.

Die erfindungsgemäße Vorrichtung enthält Mittel, mit denen für den wenigstens einen Bremskreis der Radbremszylinder ermittelt wird, der den größten Bremsdruck aufweist. Während der Zeit, während der eine fahrerunabhängige Bremsenbetätigung vorliegt, wird vorteilhafter Weise für den Radbremszylinder, der den größten Bremsdruck aufweist, das erste Ventil der ersten Ventilanordnung in Durchlaßstellung und das zweite Ventil der ersten Ventilanordnung in Sperrstellung geschaltet. Durch diese Ansteuerung der ersten Ventilanordnung erreicht man, daß der Druck im Bremskreis dem Druck des Radbremszylinders, der den größten Bremsdruck aufweist, entspricht. Gleichzeitig wird das Volumen des Bremskreises vergrößert, wodurch eventuell auftretende Druckspitzen nicht allzu groß werden können.

Bei einer fahrerunabhängigen Bremsenbetätigung, insbesondere bei einem fahrerunabhängigen Bremsdruckaufbau, wird der Bremsdruck des Radbremszylinders, der den größten Bremsdruck aufweist, vorteilhafter Weise durch entsprechende Ansteuerung der zweiten Ventilanordnung eingestellt. Durch diese Vorgehensweise kann die diesem Radbremszylinder zugeordnete erste Ventilanordnung in vorstehend beschriebener Stellung verbleiben. Zur Einstellung des jeweiligen Bremsdruckes der restlichen Radbremszylinder des Bremskreises wird zusätzlich zu der zweiten Ventilanordnung die dem jeweiligen Radbremszylinder zugeordnete erste Ventilanordnung entsprechend angesteuert.

Für den Bremskreis wird die Ansteuerung der ersten Ventilanordnungen und die Ansteuerung der zweiten Ventilanordnung vorteilhafterweise wie folgt vorgenommen: Für die dem Bremskreis zugeordneten Radbremszylinder wird mit entsprechenden Mitteln der jeweilige Volumenbedarf ermittelt. Die Ermittlung des jeweiligen Volumenbedarfes wird dabei in vorteilhafter Weise wenigstens in Abhängigkeit des Bremsdruckes, der im jeweiligen Radbremszylinder aufgrund der Vorgaben vom Regler eingestellt ist, vorgenommen. Ausgehend von den einzelnen Volumenbedarfe wird die Summe dieser Volumenbedarfe ermittelt. Durch Bildung dieser Summe entsteht ein Maß dafür, ob aufgrund der fahrerunabhängigen Bremsenbetätigung dem Bremskreis Bremsmedium zugeführt oder ob aus dem Bremskreis Bremsmedium abgeführt werden muß. Da es sich bei der zweiten Ventilanordnung um die sogenannten Kreisventile des Bremskreises handelt, die den Bremskreis eingangsseitig mit dem Vorratsbehälter verbinden, und über die Bremsmedium in den Bremskreis eingeführt bzw. ausgeführt werden kann, wird die zweite Ventilanordnung vorteilhafterweise in Abhängigkeit besagter Summe angesteuert. Die ersten Ventilanordnungen der restlichen Radbremszylinder werden jeweils wenigstens in Abhängigkeit des Volumenbedarfs des entsprechenden Radbremszylinders angesteuert.

Durch die vorstehend beschriebene Ansteuerung der ersten Ventilanordnungen und der zweiten Ventilanordnung erreicht man für den Bremskreis folgendes: Da die zweite Ventilanordnung in Abhängigkeit der Summe der einzelnen Volumenbedarfe angesteuert wird, wird dem Bremskreis nur soviel Bremsmedium zugeführt, wie auch aufgrund des Bedarfs erforderlich ist. Somit können keine Druckspitzen entstehen. Entsprechendes gilt auch für die Abführung von Bremsmedium. Das über die zweite Ventilanordnung dem Bremskreis zugeführte Bremsmedium wird durch die Ansteuerung der ersten Ventilanordnungen der restlichen Radbremszylinder entsprechend deren Volumenbedarfe auf diese aufgeteilt. Dadurch, daß der Radbremszylinder, der den größten Bremsdruck aufweist, durch entsprechende Beschaltung der ihm zugeordneten ersten Ventilanordnung mit dem Bremskreis verbunden ist, werden die restlichen Radbremszylinder bei entsprechenden Druckverhältnissen auch durch diesen gespeist. Die dadurch entstehenden Druckverluste in dem Radbremszylinder, der den größten Bremsdruck aufweist, werden durch die Ansteuerung der zweiten Ventilanordnung, in die die Summe der Volumenbedarfe eingeht, ausgeglichen.

Vorteilhafterweise wird der jeweilige Volumenbedarf eines Radbremszylinders in Abhängigkeit von Ansteuerzeiten, die zur Betätigung der jeweiligen ihm zugeordneten ersten Ventilanordnung ermittelt werden und/oder in Abhängigkeit des jeweils in ihm vorherrschenden Bremsdruckes und/oder in Abhängigkeit einer Bremsdruckbezugsgröße ermittelt. Insbesondere wird der Volumenbedarf in Abhängigkeit einer aus dem in ihm vorherrschenden Bremsdruck und der Bremsdruckbezugsgröße ermittelten Differenz ermittelt.

In Abhängigkeit der Ansteuerzeiten wird ermittelt, ob für den Radbremszylinder ein Bremsdruckaufbau oder ein Bremsdruckabbau vorliegt. Bei einem vorliegenden Bremsdruckabbau wird als Bremsdruckbezugsgröße vorteilhafterweise ein kleiner vorgebbarer Wert, der beispielsweise in der Größenordnung von 0.4 bar liegt, verwendet. Dieser kleine Wert ist im vorliegenden Ausführungsbeispiel fest vorgegeben, er kann aber auch adaptiv ermittelt werden. Durch die Verwendung dieses kleinen Wertes wird erst oberhalb dieses Druckwertes der jeweilige Volumenbedarf ermittelt, was zu einer Erhöhung der Regelgenauigkeit führt, da durch diese Bremsdruckbezugsgröße, die in diesem Fall die Funktion eines Schwellenwertes hat, beispielsweise kleine, insbesondere sensorbedingte, Schwankungen in einer Vordruckgröße, die den vom Fahrer eingestellten Vordruck beschreibt, und die in die Ermittlung der Radbremszylinderdrücke eingeht, unterdrückt werden. Durch diese Vorgehensweise wird folglich eine Filterung realisiert. Bei einem vorliegenden Bremsdruckaufbau wird als Bremsdruckbezugsgröße eine Sollbremsdruckgröße gewählt, die den aufgrund der Regelung in dem zugehörigen Radbremszylinder einzustellenden Bremsdruck beschreibt. Bei einem vorliegenden Bremsdruckaufbau wird die Sollbremsdruckgröße als Bremsdruckbezugsgröße deshalb gewählt, da die Sollbremsdruckgröße den Bremsdruck beschreibt, der im Radbremszylinder aufgrund der Betätigung des Hydroaggregats einzustellen ist.

Bei Kenntnis der aus dem Bremsdruck und der Bremsdruckbezugsgröße ermittelten Differenz und den entsprechenden Ansteuerzeiten, die zur Betätigung der jeweiligen ersten Ventilanordnungen ermittelt werden, kann der jeweilige Volumenbedarf des Radbremszylinders ermittelt werden. Vorteilhafterweise wird bei einem vorliegenden Bremsdruckabbau der Volumenbedarf mit Hilfe eines ersten mathematischen Modells, insbesondere unter Verwendung physikalischer Beziehungen ermittelt. Bei einem vorliegenden Bremsdruckaufbau wird der Volumenbedarf vorteilhafterweise mit Hilfe eines zweiten mathematischen Modells, insbesondere unter Auswertung eines Kennlinienfeldes in Abhängigkeit des Bremsdruckes, ermittelt.

Vorteilhafterweise wird die Summe der einzelnen Volumenbedarfe mit einem Vergleichswert, insbesondere dem Wert Null, verglichen. Durch diesen Vergleich wird festgestellt, ob dem Bremskreis Bremsmedium zugeführt, oder ob aus dem Bremskreis Bremsmedium abgelassen werden muß. Für den Fall, bei dem diese Summe größer oder gleich dem Vergleichswert ist, wird das erste Ventil der zweiten Ventilanordnung in Abhängigkeit dieser Summe angesteuert und das zweite Ventil der zweiten Ventilanordnung geschlossen. Für den Fall, bei dem diese Summe kleiner als der Vergleichswert ist, wird das erste Ventil der zweiten Ventilanordnung geschlossen und das zweite Ventil der zweiten Ventilanordnung in Abhängigkeit dieser Summe angesteuert.

An dieser Stelle sei bemerkt, wie der Begriff Volumenbedarf im Zusammenhang mit der erfindungsgemäßen Vorrichtung bzw. dem erfindungsgemäßen Verfahren zu verstehen ist: Bei einem Bremsdruckaufbau liegt ein positiver Volumenbedarf vor, der angibt, wieviel Bremsmedium dem Bremskreis zuzuführen ist. Bei einem Bremsdruckabbau liegt ein negativer Volumenbedarf vor, der angibt, wieviel Bremsmedium aus dem Bremskreis ausgeführt bzw. abgeführt werden muß.

Die Ansteuerzeiten zur Ansteuerung des ersten und des zweiten Ventils der zweiten Ventilanordnung werden vorteilhafterweise in Abhängigkeit einer Bremskreisdruckgröße, die den im Bremskreis vorherrschenden Bremsdruck beschreibt und in Abhängigkeit der Summe der Volumenbedarfe ermittelt. Die Ansteuerzeit für das erste Ventil wird mit Hilfe eines dritten mathematischen Modells, vorzugsweise unter Auswertung eines Kennlinienfeldes in Abhängigkeit der Bremskreisdruckgröße, ermittelt. Die Ansteuerzeit für das zweite Ventil wird mit Hilfe eines vierten mathematischen Modells, insbesondere unter Verwendung physikalischer Beziehungen, ermittelt.

Die erfindungsgemäße Vorrichtung enthält ferner Mittel, mit denen in Abhängigkeit von den Ansteuerzeiten für die ersten Ventilanordnungen die Anzahl und/oder die Art der Radbremszylinder des Bremskreises ermittelt wird, an denen Bremsdruck erhöht wird. Die Anzahl und/oder die Art dieser Radbremszylinder wird bei der Ansteuerung des ersten Ventils der zweiten Ventilanordnung berücksichtigt. Die Art der Radbremszylinder wird deshalb berücksichtigt, da beispielsweise die Radbremszylinder der Vorderachse großvolumiger sind als die Radbremszylinder der Hinterachse, und deshalb bei einem Bremsdruckaufbau unterschiedliches Verhalten aufweisen. Die Anzahl der Radbremszylinder wird deshalb berücksichtigt, da sich der Bremskreis bei einem Bremsdruckaufbau in Abhängigkeit der Anzahl der Radbremszylinder, an denen der Bremsdruck erhöht wird, unterschiedlich verhält.

Weitere Vorteile sowie vorteilhafte Ausgestaltungen können den Unteransprüchen, der Zeichnung und der Beschreibung des Ausführungsbeispiels entnommen werden.

Zeichnung

Die Zeichnung besteht aus den Figuren 1 bis 3. Figur 1 zeigt in einer Übersichtsdarstellung die der erfindungsgemäßen Vorrichtung zugrundeliegende Bremsanlage. Dabei ist in Figur 1 der hydraulische Schaltplan sowie das zur Bremsanlage gehörende Steuergerät dargestellt. Figur 2 zeigt in einer Übersichtsanordnung, das der erfindungsgemäßen Vorrichtung zugrundeliegende Steuergerät zur Durchführung des erfindungsgemäßen Verfahrens. Figur 3 zeigt mit Hilfe eines Ablaufdiagrammes eine Ausführungsform zur Durchführung des erfindungsgemäßen Verfahrens.

Es sei darauf hingewiesen, daß Blöcke mit derselben Bezeichnung in unterschiedlichen Figuren dieselbe Funktion haben.

Ausführungsbeispiel

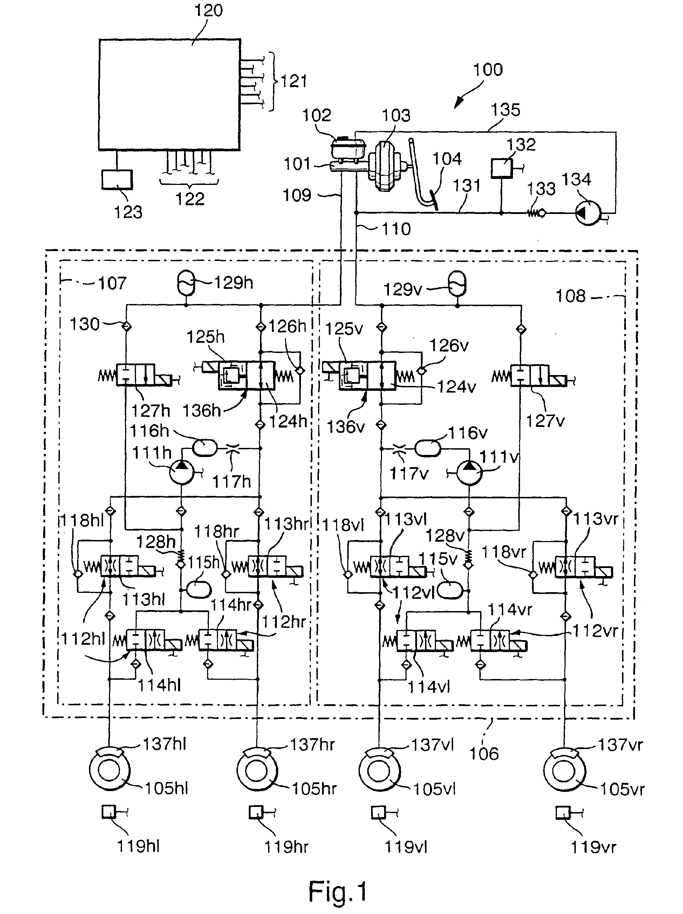

Zunächst soll auf Figur 1 eingegangen werden.

Dem Ausführungsbeispiel liegt eine in einem Fahrzeug enthaltene Bremsanlage 100, wie sie in Figur 1 dargestellt ist, zugrunde. Die Bremsanlage besitzt einen zweikreisigen Hauptbremszylinder 101 mit einem Vorratsbehälter 102, mit beispielsweise einem pneumatischen Bremskraftverstärker 103 und mit einem Bremspedal 104, sowie zwei Bremskreise 107 bzw. 108. Dem Bremskreis 107 sind die beiden Räder 105hl bzw. 105hr nebst zugehörigen Radbremszylindern 137hl bzw. 137hr zugeordnet. Dem Bremskreis 108 sind die beiden Räder 105vl bzw. 105vr nebst zugehörigen Radbremszylindern 137vl bzw. 137vr zugeordnet. Zwischen dem Hauptbremszylinder 101 und den Radbremszylindern 137hl, 137hr, 137vl bzw. 137vr ist ein Hydroaggregat 106 angeordnet.

Nachfolgend wird für die Räder des Fahrzeuges die vereinfachende Schreibweise 105ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (l) Fahrzeugseite an. Diese Kennzeichnung durch die beiden Indizes i bzw. j ist für sämtliche Größen bzw. Komponenten, bei denen sie Verwendung findet, beispielsweise den Radbremszylindern 137ij bzw. den in der Bremsanlage enthaltenen Ventilen bzw. Pumpen entsprechend.

Bei der in Figur 1 gezeigten Bremskreisaufteilung handelt es sich um eine sogenannte Schwarz/weiß-Aufteilung. Diese Bremskreisaufteilung enthält einen Bremskreis 1, der mit 107 bezeichnet ist und einen Bremskreis 2, der mit 108 bezeichnet ist. Diese Bremskreisaufteilung soll keine Einschränkung darstellen. Es ist auch denkbar, das erfindungsgemäße Verfahren bzw. die erfindungsgemäße Vorrichtung in einer Bremsanlage mit anderer Bremskreisaufteilung, beispielsweise einer Diagonalaufteilung, einzusetzen.

Der Hauptbremszylinder 101 ist beispielsweise in an sich bekannter Weise aufgebaut und unter Zuhilfenahme des Bremspedals 104 betätigbar, so daß in den Bremskreisen 107 und 108 Bremsdrücke entstehen. Die mittels des Bremspedals 104 auf den Hauptbremszylinder 101 ausübbare Wirkung ist mittels des Bremskraftverstärkers 103 verstärkbar. Der Vorratsbehälter 102 versorgt den Hauptbremszylinder 101 mit Druckmittel, das vom Hauptbremszylinder 101 aus in Richtung zu den Radbremszylindern 137ij durch das Hydroaggregat 106 hindurch drückbar ist für einen normalen Bremsbetrieb.

Das Hydroaggregat 106 ist für die Beeinflussung von Radschlupf bei Betätigung des Bremspedals 104 als sogenannter Rückfördertyp ausgebildet und besitzt für den Bremskreis 107 eine Rückförderpumpe 111h und für den Bremskreis 108 eine Rückförderpumpe 111v. Ferner besitzt das Hydroaggregat 106 für jeden der Radbremszylinder 137ij eine erste Ventilanordnung 112ij, die aus jeweils einem ersten Ventil 113ij, einem Einlaßventil, und einem zweiten Ventil 114ij, einem Auslaßventil besteht. Ferner enthalten die Bremskreise 107 bzw. 108 jeweils eine Speicherkammer 115i. Des weiteren sind in entsprechender Weise beispielsweise Dämpferkammern 116i sowie Dämpferdrosseln 117i vorgesehen. Der für den Antrieb der Rückförderpumpen 111i erforderliche Motor ist in Figur 1 nicht dargestellt. An dieser Stelle sei bemerkt, daß es auch denkbar ist, für jede der Rückförderpumpen 111i einen gesonderten Motor vorzusehen. Auch kann die bauliche Anordnung der Rückförderpumpen 111i verschieden realisiert sein. Ausgehend von den Radbremszylindern 137ij sind deren jeweils zugeordnete Einlaßventile 113ij in Richtung zum Hauptbremszylinder 101 umgehbar mittels Rückschlagventilen 118ij, die in Richtung zum Hauptbremszylinder 101 hin öffenbar sind bei einem Druckgefälle über dem jeweiligen Einlaßventil 113ij, beispielsweise wenn dieses in seine Sperrstellung gesteuert ist oder wenn in seiner normalen Offenstellung eine zugeordnete Drossel wirksam ist.

Anläßlich einer Betätigung des Bremspedals 104 und deshalb den Radbremszylindern 137ij zugeführtem Bremsdruck ist Radschlupfregelbetrieb möglich mittels der genannten Einzelelemente des Hydroaggregats 106. Hierzu befinden sich die Einlaßventile 113ij zwischen den jeweiligen Radbremszylinder 137ij und dem Hauptbremszylinder 101 normalerweise in Offenstellung, der Durchlaßstellung, so daß durch Betätigung des Bremspedals 104 im Hauptbremszylinder 101 erzeugter Druck normalerweise in die Radbremszylinder 137ij gelangen kann. Die jeweils ebenfalls mit den Radbremszylindern 137ij verbundene Auslaßventile 114ij sind in der Normalstellung, der Sperrstellung, geschlossen und ermöglichen in gesteuerter Stellung einen drosselnden Durchlaß und sind mit der zugehörigen Rückförderpumpe 111i eingangsseitig verbunden. Ausgangsseitig an die Rückförderpumpen 111i schließen sich die Dämpfer 116i an. In Richtung zum Hauptbremszylinder 101 sowie zu den jeweiligen Einlaßventilen 113i folgen auf die Dämpferkammern 116i die Drosseln 117i.

Zum Hydroaggregat 106 gehört noch ein Steuergerät 120 sowie den Rädern 105ij zugeordnete Raddrehzahlsensoren 119ij. Die mit Hilfe der Raddrehzahlsensoren 119ij erzeugten Signale nij werden dem Steuergerät 120 zugeführt. Dies ist in Figur 1 durch die von den Raddrehzahlsensoren 119ij abgehenden elektrischen Leitungen sowie durch die Anschlüsse 122 am Steuergerät, die die dem Steuergerät zugeführten Signale darstellen sollen, angedeutet. Weitere mit dem Steuergerät 120 in Verbindung stehende Sensoren sind durch den Block 123 angedeutet. An das Steuergerät 120 sind die bereits beschriebenen Pumpen bzw. Ventile sowie weitere noch zu beschreibende Pumpen bzw. Ventile angeschlossen. Dies ist durch die Anschlüsse 121, die die vom Steuergerät 120 abgehenden Ansteuersignale darstellen sollen, und durch die an den Ventilen bzw. Pumpen sich befindenden elektrischen Leitungen angedeutet.

Bei dem Steuergerät 120 kann es sich beispielsweise um ein Steuergerät zur Regelung des Bremsschlupfes bzw. zur Regelung des Antriebsschlupfes bzw. zur Regelung einer die Fahrdynamik des Fahrzeuges beschreibenden Größe, insbesondere der Gierrate des Fahrzeuges, handeln.

Zum automatischen Bremsen besitzt das Hydroaggregat 106 noch Umschaltventile 136i, die in einer ersten Stellung als Durchlaßventil 124i und in einer zweiten Stellung als Druckbegrenzungsventil 125i fungieren. Parallel zu diesen Umschaltventilen 136i sind Rückschlagventile 126i angeordnet. Durch die Rückschlagventile 126i wird sichergestellt, daß der vom Fahrer eingestellte Vordruck Pvor zur Verfügung gestellt wird. Desweiteren sind den Rückförderpumpen 111i eingangsseitig noch Vorladeventile 127i sowie Rückschlagventile 128i zugeordnet. Die Ventile 127i und 136i seien nachfolgend zu einer zweiten Ventilanordnung zusammengefaßt, wobei das Ventil 127i das erste und das Ventil 136i das zweite Ventil der zweiten Ventilanordnung darstellen sollen. Zwischen den Anschlüssen der Umschaltventile 136i sowie den Vorladeventilen 127i, die dem Hauptbremszylinder 101 zugewandt sind, sind jeweils Dämpferkammern 129i vorgesehen. Zur Versorgung des Hydroaggregats 106 für automatischen Bremsbetrieb ist wenigstens ein Pumpenaggregat 134, insbesondere eine Vorladepumpe, vorgesehen, welches dem Bremskreis 108 zugeordnet ist. Zu dem Bremskreis 107 besteht über den Hauptbremszylinder 101 eine Verbindung. Von dem Pumpenaggregat 135 verläuft zu einer Hauptbremsleitung 110, die sich zwischen dem Hauptbremszylinder 101 und dem Hydroaggregat 106 befindet, eine Einspeiseleitung 131, in die ein zur Hauptbremsleitung 110 hin öffenbares Rückschlagventil 133 eingebaut ist. Das Pumpenaggregat 134 ist mittels einer Saugleitung 135 an den Vorratsbehälter 102 angeschlossen. Zwischen dem Rückschlagventil 133 und der Hauptbremsleitung 110 ist ein Sensor 132 vorgesehen, der ein Signal erzeugt, welches den vom Fahrer eingestellten Vordruck Pvor repräsentiert.

Der zweite Bremskreis 107 ist über eine ihm zugeordnete Hauptbremsleitung 109, die sich ebenfalls zwischen dem Hauptbremszylinder 101 und dem Hydroaggregat 106 befindet, an den Hauptbremszylinder 101 angeschlossen.

Neben den bereits beschriebenen Komponenten enthält das Hydroaggregat an verschiedenen Stellen mit 130 bezeichnete Filter, auf die hier nicht näher eingegangen wird.

Abschließend sei zu Figur 1 bemerkt, daß es auch denkbar ist, die beschriebene Funktion der Bremsanlage unter Verwendung anderer Komponenten zu realisieren. Außerdem soll die Darstellung einer hydraulischen Bremsanlage keine Einschränkung darstellen. Der Einsatz des erfindungsgemäßen Verfahrens bzw. der erfindungsgemäßen Vorrichtung wäre auch im Zusammenhang mit einer pneumatischen oder einer elektrohydraulischen oder einer elektropneumatischen Bremsanlage denkbar.

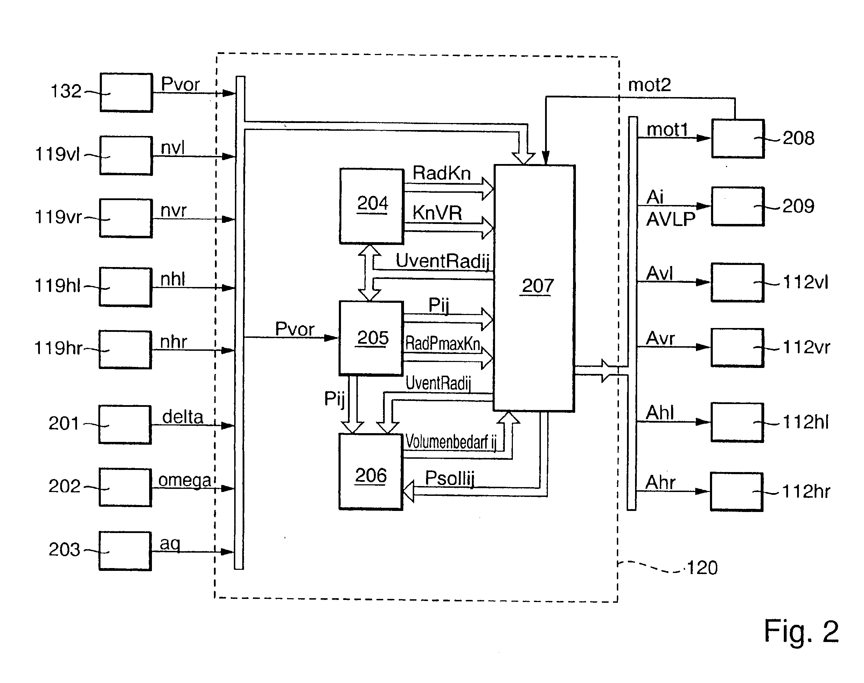

Nachfolgend soll auf Figur 2 eingegangen werden.

Block 120 stellt das in der erfindungsgemäßen Vorrichtung zur Regelung wenigstens einer Fahrdynamikgröße eines Fahrzeuges, welches nicht dargestellt ist, enthaltene Steuergerät dar. Mit den Blöcken 132, 119ij, 201, 202 bzw. 203 sind Mittel dargestellt, mit denen die zur Regelung wenigstens einer Fahrdynamikgröße, wie sie in der vorstehend erwähnten Veröffentlichung "FDR - Die Fahrdynamikregelung von Bosch" beschrieben ist, spezifischen Fahrzeuggrößen erfaßt werden. Der Block 132 stellt einen Drucksensor dar, mit dem eine Vordruckgröße Pvor, die den vom Fahrer eingestellten Vordruck beschreibt, erfaßt wird. Die Blöcke 119ij stellen Raddrehzahlsensoren dar, mit denen für die Räder entsprechende Raddrehzahlgrößen nij erfaßt werden. Der Block 201 stellt einen Lenkwinkelsensor dar, mit dem der vom Fahrer eingestellte Lenkwinkel delta erfaßt wird. Der Block 202 stellt einen Gierratensensor dar, mit dem die Gierrate omega des Fahrzeuges, d.h. die Drehgeschwindigkeit des Fahrzeuges um seine Hochachse erfaßt wird. Der Block 203 stellt einen Querbeschleunigungssensor dar, mit dem die auf das Fahrzeug wirkende Querbeschleunigung aq erfaßt wird. Die Größe omega stellt die Fahrdynamikgröße des Fahrzeuges dar, die mit der erfindungsgemäßen Vorrichtung geregelt wird.

Die vorstehend beschriebene Sensorik ist für sogenannte Fahrdynamikregelsysteme, wie sie in der vorstehend erwähnten Veröffentlichung "FDR - Die Fahrdynamikregelung von Bosch" beschrieben sind, charakteristisch. Die Blöcke 201, 202 bzw. 203 sind in Figur 1 zum Block 123 zusammengefaßt.

Die mit der Sensorik erfaßten Größen Pvor, nij, delta, omega sowie aq werden einem Block 207, der den im Steuergerät 120 implementierten Regler darstellt, und der noch zu beschreiben ist, zugeführt.

In einem Block 204 wird die Art und die Anzahl der Radbremszylinder des Bremskreises ermittelt, an denen der Bremsdruck erhöht wird, d.h. es werden die aktiven Radbremszylinder des Bremskreises ermittelt. Die Ermittlung der Art und der Anzahl dieser Radbremszylinder erfolgt in Abhängigkeit von Größen UventRadij, die ausgehend vom Block 207 dem Block 204 zugeführt werden. Bei den Größen UventRadij handelt es sich um die Ansteuerzeiten von Aktuatoren 112ij, mit denen Bremsmomente an den Rädern des Fahrzeuges erzeugbar sind. Insbesondere handelt es sich um Ventilansteuerzeiten. An dieser Stelle sei bemerkt, daß die in Figur 2 enthaltenen Aktuatoren 112ij den in Figur 1 dargestellten Ventile 113ij und 114ij entsprechen, d.h. die Aktuatoren 112ij entsprechen den ersten Ventilanordnungen. Auf die Ermittlung der Größen UventRadij wird noch eingegangen.

Zur Ermittlung der Anzahl der aktiven Radbremszylinder in einem Bremskreis wird beispielsweise für die Radbremszylinder jeweils überprüft, ob die Größe UventRadij positiv ist, da für eine positive Größe UventRadij die jeweilige erste Ventilanordnung so angesteuert wird, daß Bremsdruck im entsprechenden Radbremszylinder 137ij aufgebaut wird. Hierzu wird die Größe UventRadij insbesondere mit dem Wert Null verglichen. Ist die entsprechende Größe UventRadij positiv, so wird ein Zähler Radkn erhöht. Beim Zähler RadKn bezeichnet der Buchstabe n den entsprechenden Bremskreis. Dies bedeutet: Weist die Bremsanlage zwei Bremskreise auf, so nimmt der Buchstabe n die Werte 1 bzw. 2 an. Diese Kennzeichnung durch den Buchstaben n ist bei anderen Großen bzw. Variablen, bei denen sie ebenfalls verwendet wird, entsprechend.

Bei der Ermittlung der Art der in einem Bremskreis aktiven Radbremszylinder wird ausgehend von den Größen UventRadij beispielsweise festgestellt, ob das in einem Bremskreis vorhandene Vorderrad aktiv ist, d.h. ob an diesem Vorderrad Bremsdruck aufgebaut wird. Wird an dem Vorderrad des Bremskreises Bremsdruck aufgebaut, so wird der Variablen KnVR der Wert TRUE zugewiesen. Die Ermittlung der Art der aktiven Räder ist für die in Figur 1 dargestellte Bremsanlage nicht unbedingt erforderlich, da diese Bremsanlage eine Schwarz/Weiß-Aufteilung aufweist, bei der der Bremskreis 1 die Hinterräder und der Bremskreis 2 die Vorderräder enthält. Die Ermittlung ist beispielsweise jedoch für eine Bremsanlage mit Diagonalaufteilung von Bedeutung. Da das erfindungsgemäße Verfahren bzw. die erfindungsgemäße Vorrichtung für beliebige Bremsanlagen einsetzbar ist, ist diese Ermittlung von vornherein vorgesehen, um zu allen denkbaren Bremsanlagen kompatibel zu sein.

Sowohl der im Block 204 erzeugte Zähler RadKn als auch die Variable KnVR werden dem Block 207 zugeführt.

In einem Block 205 werden Druckgrößen Pij ermittelt, die die in den Radbremszylindern der Räder vorherrschenden Bremsdrücke beschreiben. Die Druckgrößen Pij werden beispielsweise, wie in der oben erwähnte Veröffentlichung "FDR - Die Fahrdynamikregelung von Bosch" beschrieben, in Abhängigkeit vom Vordruck Pvor und in Abhängigkeit der Ventilansteuerzeiten UventRadij für die Mittel 112ij ermittelt. Die Ermittlung der Druckgrößen Pij erfolgt hierbei beispielsweise unter Verwendung eines mathematischen Modells. Die Druckgrößen Pij werden ausgehend vom Block 205 sowohl einem Block 206 als auch dem Block 207 zugeführt. Alternativ zu der vorstehend beschriebenen Ermittlung der Druckgrößen Pij bietet sich auch an, diese Druckgrößen mit Hilfe von Drucksensoren, die den entsprechenden Rädern zugeordnet sind, zu erfassen.

Ausgehend von den Druckgrößen Pij wird im Block 205 der Radbremszylinder des Bremskreises ermittelt, der den größten Bremsdruck aufweist. Dieser Radbremszylinder wird in der Variablen RadPmaxKn abgelegt. Der Radbremszylinder des Bremskreises, der den größten Bremsdruck aufweist wird in bekannter Art und Weise durch Vergleiche der Druckgrößen Pij untereinander ermittelt. Die Variable RadPmaxKn wird ausgehend vom Block 205 dem Block 207 zugeführt.

Im Block 206 wird der jeweilige Volumenbedarf Volumenbedarfij der Radbremszylinder ermittelt. Zu diesem Zweck werden dem Block 206 ausgehend vom Block 205 die Druckgrößen Pij, sowie ausgehend vom Block 207 sowohl die Größen UventRadij als auch Sollbremsdruckgrößen Psollij zugeführt. Die Sollbremsdruckgrößen Psollij beschreiben den aufgrund der Regelung in dem zugehörigen Radbremszylinder einzustellenden Bremsdruck. Die für die Radbremszylinder ermittelten Volumenbedarfe Volumenbedarfij werden ausgehend vom Block 206 dem Block 207 zugeführt.

Die Volumenbedarfe Volumenbedarfij der einzelnen Radbremszylinder werden folgendermaßen ermittelt: Für die Radbremszylinder wird mit Hilfe der Ventilansteuerzeit UventRadij entschieden, ob für diesen Radbremszylinder ein Bremsdruckaufbau oder ein Bremsdruckabbau vorliegt. Liegt ein Bremsdruckabbau vor, so wird als Bremsdruckbezugsgröße ein kleiner vorgebbarer Wert PminKn verwendet. Dieser Wert PminKn ist im vorliegenden Ausführungsbeispiel ein fest vorgegebener Wert, der im Block 206 gespeichert ist. Alternativ kann der Wert PminKn auch adaptiv ermittelt werden. In Abhängigkeit des in dem entsprechenden Radbremszylinder vorherrschenden Bremsdruckes und der Bremsdruckbezugsgröße wird eine Differenz gebildet. Der jeweilige Volumenbedarf Volumenbedarfij wird mit Hilfe eines ersten mathematischen Modells, insbesondere unter Verwendung physikalischer Beziehungen, ermittelt. Diesem ersten mathematischen Modell liegt beispielsweise folgende physikalische Beziehung zugrunde:

$$\text{Volumenbedarfij} = \text{UventRadij} \cdot \sqrt{\text{Pij} - \text{P min Kn}} \qquad\qquad (1)$$

Wie der vorstehenden Gleichung (1) zu entnehmen ist, wird der Volumenbedarf Volumenbedarfij in Abhängigkeit von der Ventilansteuerzeit UventRadij und der vorstehend beschriebenen Druckdifferenz ermittelt. Als vorteilhaft hat sich erwiesen, wenn bei der Ermittlung des Volumenbedarfs Volumenbedarfij die Drosseldurchmesser der in der Bremsanlage verwendeten Ventile berücksichtigt werden.

Liegt dagegen ein Bremsdruckaufbau vor, so wird als Bremsdruckbezugsgröße die entsprechende Sollbremsdruckgröße Psollij verwendet. In Abhängigkeit des in dem entsprechenden Radbremszylinder vorherrschenden Bremsdruckes und der Bremsdruckbezugsgröße wird ebenfalls eine Differenz gebildet. Unter Verwendung eines zweiten mathematischen Modells wird der entsprechende Volumenbedarf Volumenbedarfij des Radbremszylinders ermittelt. Bei diesem zweiten mathematischen Modell wird ein Kennlinienfeld in Abhängigkeit des im Radbremszylinder vorherrschenden Bremsdruckes ausgewertet. Durch die Auswertung erhält man einen Wert, mit dem die vorstehend beschriebene Druckdifferenz bewertet wird, wodurch sich der entsprechende Volumenbedarf des Radbremszylinder ergibt. Auch hier ist es von Vorteil, wenn bei der Ermittlung des Volumenbedarfs die Drosseldurchmesser der in der Bremsanlage verwendeten Ventile berücksichtigt werden.

Mit 207 ist der im Steuergerät 120 implementierte Regler bzw. Fahrzeugregler bezeichnet. Dieser enthält gleichzeitig auch eine Ansteuerlogik für den Motor 208, einen Block 209 und die Aktuatoren 112ij. Im Block 209 sind die in der Bremsanlage enthaltenen Pumpen 111i, 134 sowie die Ventile 127i und 136i der zweiten Ventilanordnung zusammengefaßt. Bei dem Regler 207 handelt es sich um einen, der in seiner Grundfunktion eine die Fahrdynamik beschreibende Größe, beispielsweise eine die Gierrate des Fahrzeugs beschreibende Größe durch Bremseingriffe und/oder durch Motoreingriffe regelt. An dieser Stelle sei auf die vorstehend erwähnte Veröffentlichung "FDR - Die Fahrdynamikregelung von Bosch" verwiesen. Alternativ kann es sich bei dem Regler 207 auch um einen Bremsschlupfregler und/oder um einen Antriebsschlupfregler handeln.

Die im Block 207 in ihrer Grundfunktion stattfindende Regelung basiert in bekannter Weise auf den ihm zugeführten Größen Pvor, nij, delta, omega, aq sowie einer Große mot2, die beispielsweise die Motordrehzahl des Motors 208 beschreibt.

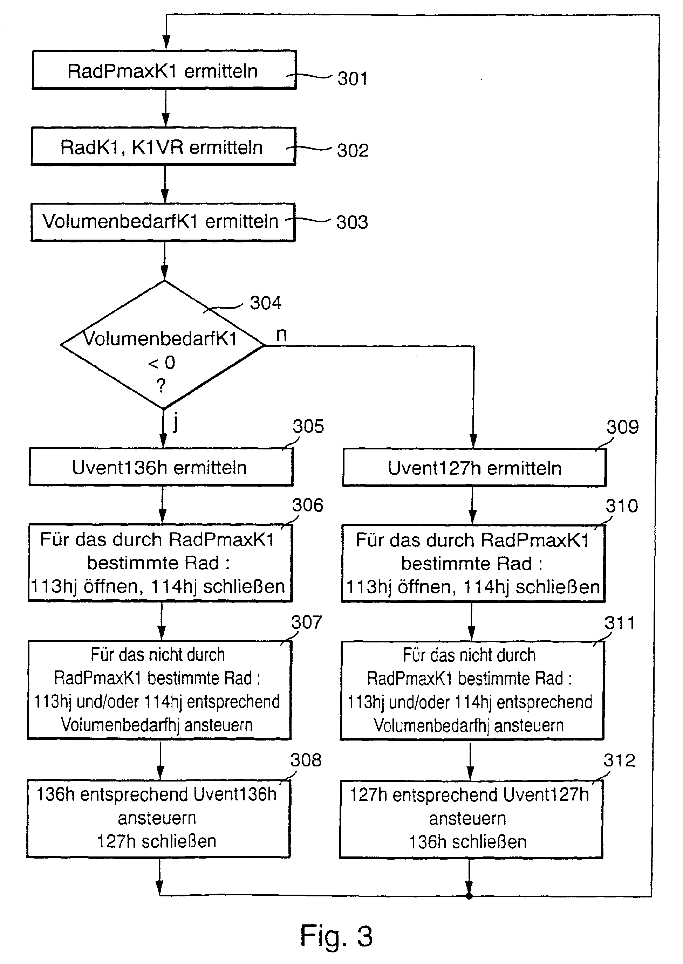

Der Regler 207 erzeugt Ansteuersignale und/oder Ansteuergrößen mot1, Ai, AVLP bzw. Aij, mit denen der Motor 208, die zum Block 209 zusammengefaßten Komponenten sowie die Aktuatoren 112ij angesteuert werden. Bezüglich der Erzeugung der Größe mot1 wird auf die vorstehend aufgeführte Veröffentlichung "FDR - Die Fahrdynamikregelung von Bosch" verwiesen. Ausgehend von den Volumenbedarfen Volumenbedarfij werden zum einen die Ansteuersignale und/oder Ansteuergrößen Ai bzw. AVLP ermittelt. Durch Ai werden die Ventile 127i bzw. 136i sowie die Pumpen 111i angesteuert. Im Zusammenhang mit Figur 3 wird hierauf noch ausführlich eingegangen. Mit AVLP wird die Pumpe 134 angesteuert. Zum anderen werden die Ansteuersignale und/oder Ansteuergrößen Aij für die Aktuatoren 112ij ermittelt. Auch die Ermittlung der Aij wird im Zusammenhang mit Figur 3 noch ausführlich beschrieben. Mit Hilfe der Ansteuergröße mot1 wird beispielsweise die Drosselklappenstellung des Motors beeinflußt.

In Figur 3 wird mit Hilfe eines Flußdiagrammes das in der erfindungsgemäßen Vorrichtung ablaufende erfindungsgemäße Verfahren dargestellt. Dabei beschränkt sich die Darstellung in Figur 3 der Übersichtlichkeit halber auf den Bremskreis 1, der in Figur 1 mit 107 gekennzeichnet ist. Dies soll keine Einschränkung darstellen. Für den Bremskreis 2, in Figur 1 mit 108 gekennzeichnet, läuft das erfindungsgemäße Verfahren entsprechend ab. Im Normalfall läuft das in Figur 3 dargestellte Verfahren sowohl für den Bremskreis 1 als auch für den Bremskreis 2 parallel, d.h. zeitgleich in der erfindungsgemäßen Vorrichtung ab.

Vorab sei festgehalten, daß das in Figur 3 dargestellte erfindungsgemäße Verfahren, wie bereits vorstehend erwähnt, bei einer fahrerunabhängigen Bremsenbetätigung, insbesondere bei einem fahrerunabhängigen Bremsdruckaufbau abläuft. Aus diesem Grund wurde in der Figur 3 auf die Darstellung einer entsprechenden Abfrage verzichtet.

Das erfindungsgemäße Verfahren beginnt mit einem Schritt 301. In diesem Schritt wird die Größe RadPmaxK1 ermittelt. An dieser Stelle sei auf die Beschreibung des in Figur 2 enthaltenen Blockes 205, in dem diese Größe ermittelt werden, verwiesen. Anschließend an den Schritt 301 wird ein Schritt 302 ausgeführt. Im Schritt 302 werden die Größen RadK1 bzw. K1VR ermittelt. Die Ermittlung dieser beiden Größen findet in dem in Figur 2 enthaltenen Block 204 statt, deshalb sei an dieser Stelle auf die entsprechende Beschreibung verwiesen. Anschließend an den Schritt 302 wird ein Schritt 303 ausgeführt.

Im Schritt 303 wird der Volumenbedarf VolumenbedarfK1 des Bremskreises 1 ermittelt. Hierzu wird die Summe der einzelnen Volumenbedarfe Volumenbedarfij der im Bremskreis 1 enthaltenen Radbremszylinder ermittelt. Bezüglich der Ermittlung der Volumenbedarfe Volumenbedarfij sei auf die Beschreibung des Blockes 206, in welchem diese stattfindet, verwiesen. Anhand der Größe VolumenbedarfK1 kann festgestellt werden, ob dem Bremskreis 1 Bremsmedium zugeführt oder ob aus dem Bremskreis 1 Bremsmedium abgeführt werden muß.

Der vorstehend beschriebene Sachverhalt wird im Schritt 304, der sich an den Schritt 303 anschließt, mit Hilfe der in diesem Schritt stattfindenden Abfrage ausgewertet.

Im Schritt 304 wird die Größe VolumenbedarfK1 mit einem kleinen Wert, insbesondere dem Wert Null, verglichen. Wird im Schritt 304 festgestellt, daß die Größe VolumenbedarfK1 kleiner als der kleine Wert ist, was gleichbedeutend damit ist, daß für den Bremskreis 1 ein Druckabbau erforderlich ist, d.h. daß aus dem Bremskreis 1 Bremsmedium abgeführt werden muß, so wird anschließend an den Schritt 304 ein Schritt 305 ausgeführt. Wird dagegen im Schritt 304 festgestellt, daß die Größe VolumenbedarfK1 größer als der kleine Wert ist, was gleichbedeutend damit ist, daß für den Bremskreis 1 ein Druckaufbau erforderlich ist, d.h. daß dem Bremskreis 1 Bremsmedium zugeführt werden muß, so wird anschließend an den Schritt 304 ein Schritt 309 ausgeführt.

Wird im Schritt 304 festgestellt, daß für den Bremskreis 1 ein Bremsdruckabbau erforderlich ist, so ist es hierzu erforderlich, das Ventil 136h zu öffnen, d.h. in Stellung 124h zu bringen, und das Ventil 127h zu schließen. Da das Ventil 136h während einer fahrerunabhängigen Bremsenbetätigung geschlossen ist, wird in dem Schritt 305 die Ansteuerzeit Uvent136h für das Ventil 136h ermittelt, während der dieses Ventil zu öffnen ist.

Die Ansteuerzeit Uvent136h wird wie folgt ermittelt: Es wird eine Bremskreisdruckgröße Pkreis1, die den im Bremskreis 1 vorherrschenden Bremsdruck beschreibt, ermittelt. Die Ermittlung dieser Bremskreisdruckgröße Pkreis1 kann beispielsweise entsprechend dem Verfahren, wie es in der beim Deutschen Patentamt unter dem Aktenzeichen 197 12 889.0 eingereichten Anmeldung beschrieben ist, vorgenommen werden. In Abhängigkeit dieser Bremskreisdruckgröße und der Vordruckgröße Pvor, die den vom Fahrer eingestellten Vordruck beschreibt, wird eine Differenz gebildet. In Abhängigkeit dieser Differenz und des Volumenbedarfs VolumenbedarfK1 wird die Ansteuerzeit Uvent136h mit Hilfe eines vierten mathematischen Modells, insbesondere unter Verwendung physikalischer Beziehungen, ermittelt. Das vierte mathematische Modell kann beispielsweise durch folgende Gleichung beschrieben werden:

$$\text{Uvent136h} = \text{Volumenbedarfk1} / \sqrt{\text{Pkreis1} - \text{Pvor}} \qquad (2)$$

Auch hier ist es wieder von Vorteil, wenn die Ansteuerzeit Uvent136h auf die Drosseldurchmesser der in der Bremsanlage verwendeten Ventile bezogen wird.

Im Anschluß an den Schritt 305 wird ein Schritt 306 ausgeführt. In diesem Schritt 306 wird, wie bereits oben schon erwähnt, für das Rad, welches durch die Größe RadPmaxK1 bestimmt ist, d.h. für das Rad, dessen Radbremszylinder den größten Bremsdruck im Bremskreis 1 aufweist, das Ventil 113hj geöffnet und das Ventil 114hj geschlossen. D.h. das Ventil 113hj befindet sich in Durchlaßstellung und das Ventil 114hj befindet sich in Sperrstellung. Anschließend an den Schritt 306 wird ein Schritt 307 ausgeführt.

Im Schritt 307 wird für das Rad, welches nicht durch die Größe RadPmaxK1 bestimmt ist, das Ventil 113hj und/oder das Ventil 114hj entsprechend des zugehörigen Volumenbedarfs Volumenbedarfhj angesteuert. In diesem Zusammenhang sie auf die vorstehend erwähnte Veröffentlichung "FDR - Die Fahrdynamikregelung von Bosch" verwiesen.

Anschließend an den Schritt 307 wird ein Schritt 308 ausgeführt, in welchem das Ventil 136h entsprechend der Ansteuerzeit Uvent136h angesteuert wird. Außerdem wird im Schritt 308 das Ventil 127h geschlossen. Anschließend an den Schritt 308 wird erneut der Schritt 301 ausgeführt.

Wird im Schritt 304 festgestellt, daß für den Bremskreis 1 ein Bremsdruckaufbau erforderlich ist, so ist es hierzu erforderlich, das Ventil 127h zu öffnen und das Ventil 136h zu schließen, d.h. in Stellung 125h zu bringen. Aus diesem Grund wird im Schritt 309 die Ansteuerzeit Uvent127h für das Ventil 127h ermittelt. Die Ermittlung der Ansteuerzeit Uvent127h läuft folgendermaßen ab: Zunächst wird entsprechend dem Schritt 305 eine Bremskreisdruckgröße Pkreis1 ermittelt. Diese Bremskreisdruckgröße wird als Eingangsgröße für ein drittes mathematisches Modell verwendet, mit dessen Hilfe die Ansteuerzeit Uvent127h ermittelt wird. Bei diesem dritten mathematischen Modell wird ein Kennlinienfeld in Abhängigkeit der Bremskreisdruckgröße Pkreis1 ausgewertet. Durch die Auswertung wird ein Wert gewonnen, mit dem der Volumenbedarf VolumenbedarfK1 bewertet wird, wodurch sich die Ansteuerzeit Uvent127h ergibt. Als vorteilhaft hat sich hierbei erwiesen, bei der Ermittlung der Ansteuerzeit Uvent127h sowohl die Anzahl als auch die Art der Radbremszylinder des Bremskreises zu berücksichtigen, an denen Bremsdruck im jeweiligen Bremskreis aufgebaut wird. Darüber hinaus wird bei der Ermittlung der Ansteuerzeit Uvent127h auch das Förderverhalten der Pumpe 111h berücksichtigt. Desweiteren ist es von Vorteil, wenn die Ansteuerzeit Uvent127h auf die Drosseldurchmesser der in der Bremsanlage verwendeten Ventile bezogen wird.

Anschließend an den Schritt 309 wird ein Schritt 310 ausgeführt, der dem bereits beschriebenen Schritt 306 entspricht. Im Anschluß an den Schritt 310 wird ein Schritt 311 ausgeführt. Dieser Schritt entspricht dem bereits beschriebenen Schritt 307. Anschließend an den Schritt 311 wird ein Schritt 312 ausgeführt, in welchem das Ventil 127h entsprechend der Ansteuerzeit Uvent127h angesteuert, d.h. geöffnet wird. Ebenfalls wird im Schritt 312 das Ventil 136h so angesteuert, daß es schließt. Anschließend an den Schritt 312 wird erneut der Schritt 301 ausgeführt.

Sowohl im Schritt 308 als auch im Schritt 312 wird die Pumpe 111h sowie die Pumpe 134 so angesteuert, daß sie fördern. Dadurch wird ein konstanter Volumenstrom gewährt.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

### Patentansprüche

1. Vorrichtung zur Regelung einer die Gierrate des Fahrzeuges beschreibenden Größe (omega), die eine Bremsanlage (100) enthält, wobei die Bremsanlage einen Vorratsbehälter (102) zur Aufnahme von Bremsmedium und wenigstens einen Bremskreis (107, 108) enthält, wobei der Bremskreis ausgangsseitig erste (112ij) Ventilanordnungen und eingangsseitig eine zweite (127i, 136i) Ventilanordnung enthält, wobei an die ersten Ventilanordnungen dem Bremskreis zugeordnete Radbremszylinder (137ij) angeschlossen sind, und wobei der Vorratsbehälter mit der zweiten Ventilanordnung in Verbindung steht,
   wobei Mittel (205) vorhanden sind, mit denen für den wenigstens einen Bremskreis der Radbremszylinder ermittelt wird, der den größten Bremsdruck aufweist, und
   wobei bei einer fahrerunabhängigen Bremsenbetätigung der Bremsdruck des Radbremszylinders, der den größten Bremsdruck aufweist, durch entsprechende Ansteuerung der zweiten Ventilanordnung eingestellt wird, und zur Einstellung des jeweiligen Bremsdruckes der restlichen Radbremszylinder des Bremskreises, zusätzlich zu der zweiten Ventilanordnung die dem jeweiligen Radbremszylinder zugeordnete erste Ventilanordnung entsprechend angesteuert wird,
   **dadurch gekennzeichnet,**

   - **daß** Mittel (206) vorgesehen sind, mit denen für die dem Bremskreis zugeordneten Radbremszylinder der jeweilige Volumenbedarf (Volumenbedarfij) ermittelt wird, und
   - **daß** wenigstens in Abhängigkeit der Summe (VolumenbedarfKn) der einzelnen Volumenbedarfe die zweite Ventilanordnung angesteuert wird, und/oder daß die ersten Ventilanordnungen der restlichen Radbremszylinder jeweils wenigstens in Abhängigkeit des Volumenbedarfs des entsprechenden Radbremszylinders angesteuert werden und

- **dass** der Bremskreis eine Pumpe (111i) enthält, und daß die zweite Ventilanordnung aus einem ersten Ventil (127i), durch welches in Durchlaßstellung bei Betätigung der Pumpe Bremsmedium in den Bremskreis hineinfließt, und aus einem zweiten Ventil (136i), durch welches in Durchlaßstellung (124i) bei Betätigung der Pumpe Bremsmedium aus dem Bremskreis herausfließt, besteht, und

- **daß** die Summe der einzelnen Volumenbedarfe mit einem Vergleichswert verglichen wird, und

- **daß** für den Fall, bei dem diese Summe größer oder gleich dem Vergleichswert ist, das erste Ventil der zweiten Ventilanordnung in Abhängigkeit dieser Summe angesteuert wird und das zweite Ventil der zweiten Ventilanordnung geschlossen wird, und

- **daß** für den Fall, bei dem diese Summe kleiner als der Vergleichswert ist, das erste Ventil der zweiten Ventilanordnung geschlossen wird und das zweite Ventil der zweiten Ventilanordnung in Abhängigkeit dieser Summe angesteuert wird.

2. Vorrichtung nach Anspruch 1, **dadurch gekennzeichnet, daß** die erste Ventilanordnung jeweils aus einem ersten (113ij) und einem zweiten (114ij) Ventil besteht, und daß für den Radbremszylinder, der den größten Bremsdruck aufweist, während der fahrerunabhängigen Bremsenbetätigung das erste Ventil der ersten Ventilanordnung in Durchlaßstellung und das zweite Ventil der ersten Ventilanordnung in Sperrstellung geschaltet wird.

3. Vorrichtung nach Anspruch 1, **dadurch gekennzeichnet, daß** der jeweilige Volumenbedarf eines Radbremszylinders in Abhängigkeit von Ansteuerzeiten (UventRadij), die zur Betätigung der jeweiligen ihm zugeordneten ersten Ventilanordnung ermittelt werden, und/oder in Abhängigkeit des jeweils in ihm vorherrschenden Bremsdruckes (Pij) und/oder in Abhängigkeit einer Bremsdruckbezugsgröße (Psollij, PminKn) ermittelt wird.

4. Vorrichtung nach Anspruch 3, **dadurch gekennzeichnet, daß** in Abhängigkeit der Ansteuerzeiten ermittelt wird, ob für den Radbremszylinder ein Bremsdruckaufbau oder ein Bremsdruckabbau vorliegt, und
daß bei einem vorliegenden Bremsdruckabbau als Bremsdruckbezugsgröße ein kleiner vorgebbarer Wert (PminKn) verwendet wird, und daß der Volumenbedarf mit Hilfe eines ersten mathematischen Modells unter Verwendung physikalischer Beziehungen, ermittelt wird, und/oder
daß bei einem vorliegenden Bremsdruckaufbau als Bremsdruckbezugsgröße eine Sollbremsdruckgröße (Psollij), die den aufgrund der Regelung in dem zugehörigen Radbremszylinder einzustellenden Bremsdruck beschreibt, ermittelt wird, und daß der Volumenbedarf mit Hilfe eines zweiten mathematischen Modells unter Auswertung eines Kennlinienfeldes in Abhängigkeit des Bremsdruckes, ermittelt wird.

5. Vorrichtung nach Anspruch 1, **dadurch gekennzeichnet, daß** eine Bremskreisdruckgröße (Pkreisn), die den im Bremskreis vorherrschenden Bremsdruck beschreibt, ermittelt wird, und
daß in Abhängigkeit dieser Bremskreisdruckgröße und der Summe der Volumenbedarfe Ansteuerzeiten zur Ansteuerung des ersten und des zweiten Ventils der zweiten Ventilanordnung ermittelt werden, wobei die Ansteuerzeit für das erste Ventil mit Hilfe eines dritten mathematischen Modells unter Auswertung eines Kennlinienfeldes in Abhängigkeit der Bremskreisdruckgröße, ermittelt wird, und/oder wobei die Ansteuerzeit für das zweite Ventil mit Hilfe eines vierten mathematischen Modells unter Verwendung physikalischer Beziehungen, ermittelt wird.

6. Vorrichtung nach Anspruch 1, **dadurch gekennzeichnet,**
**daß** Mittel (204) vorhanden sind, mit denen in Abhängigkeit von Ansteuerzeiten für die ersten Ventilanordnungen die Anzahl (RadKn) und/oder Art (KnVR) der Radbremszylinder des Bremskreises ermittelt wird, an denen Bremsdruck erhöht wird, und
**daß** die Anzahl und/oder die Art dieser Radbremszylinder bei der Ansteuerung des ersten Ventils der zweiten Ventilanordnung berücksichtigt wird.

7. Verfahren zur Regelung einer die Gierrate des Fahrzeuges beschreibenden Größe (omega), wobei das Fahrzeug eine Bremsanlage (100) enthält, die einen Vorratsbehälter (102) zur Aufnahme von Bremsmedium und wenigstens einen Bremskreis (107, 108) enthält, wobei der Bremskreis ausgangsseitig erste (112ij) Ventilanordnungen und eingangsseitig eine zweite (127i, 136i) Ventilanordnung enthält, wobei an die ersten Ventilanordnungen dem Bremskreis zugeordnete Radbremszylinder (137ij) angeschlossen sind, und wobei der Vorratsbehälter mit der zweiten Ventilanordnung in Verbindung steht,
wobei für den wenigstens einen Bremskreis der Radbremszylinder ermittelt wird, der den größten Bremsdruck aufweist, und

wobei bei einer fahrerunabhängigen Bremsenbetätigung der Bremsdruck des Radbremszylinders, der den größten Bremsdruck aufweist, durch entsprechende Ansteuerung der zweiten Ventilanordnung eingestellt wird, und zur Einstellung des jeweiligen Bremsdruckes der restlichen Radbremszylinder des Bremskreises, zusätzlich zu der zweiten Ventilanordnung die dem jeweiligen Radbremszylinder zugeordnete erste Ventilanordnung entsprechend angesteuert wird,
**dadurch gekennzeichnet,**

- **daß** für die dem Bremskreis zugeordneten Radbremszylinder der jeweilige Volumenbedarf (Volumenbedarfij) ermittelt wird, und
- **daß** wenigstens in Abhängigkeit der Summe (VolumenbedarfKn) der einzelnen Volumenbedarfe die zweite Ventilanordnung angesteuert wird, und/oder daß die ersten Ventilanordnungen der restlichen Radbremszylinder jeweils wenigstens in Abhängigkeit des Volumenbedarfs des entsprechenden Radbremszylinders angesteuert werden und
- **dass** der Bremskreis eine Pumpe (111i) enthält, und daß die zweite Ventilanordnung aus einem ersten Ventil (127i), durch welches in Durchlaßstellung bei Betätigung der Pumpe Bremsmedium in den Bremskreis hineinfließt, und aus einem zweiten Ventil (136i), durch welches in Durchlaßstellung (124i) bei Betätigung der Pumpe Bremsmedium aus dem Bremskreis herausfließt, besteht, und
- **daß** die Summe der einzelnen Volumenbedarfe mit einem Vergleichswert verglichen wird, und
- **daß** für den Fall, bei dem diese Summe größer oder gleich dem Vergleichswert ist, das erste Ventil der zweiten Ventil-anordnung in Abhängigkeit dieser Summe angesteuert wird und das zweite Ventil der zweiten Ventilanordnung geschlossen wird, und
- **daß** für den Fall, bei dem diese Summe kleiner als der Vergleichswert ist, das erste Ventil der zweiten Ventilanordnung geschlossen wird und das zweite Ventil der zweiten Ventilanordnung in Abhängigkeit dieser Summe angesteuert wird.

8. Verfahren nach Anspruch 7, **dadurch gekennzeichnet, daß** die erste Ventilanordnung jeweils aus einem ersten (113ij) und einem zweiten (114ij) Ventil besteht, und
daß für den Radbremszylinder, der den größten Bremsdruck aufweist, während der fahrerunabhängigen Bremsenbetätigung das erste Ventil der ersten Ventilanordnung in Durchlaßstellung und das zweite Ventil der ersten Ventilanordnung in Sperrstellung geschaltet wird, und/oder
daß für die dem Bremskreis zugeordneten Radbremszylinder der jeweilige Volumenbedarf (Volumenbedarfij) ermittelt wird, und
daß in Abhängigkeit der Summe (VolumenbedarfKn) der einzelnen Volumenbedarfe die zweite Ventilanordnung angesteuert wird, und/oder daß die ersten Ventilanordnungen der restlichen Radbremszylinder jeweils in Abhängigkeit des Volumenbedarfs des entsprechenden Radbremszylinders angesteuert werden.

**Claims**

1. Device for controlling a variable (omega) which describes the yaw rate of the vehicle, said device containing a brake system (100), wherein the brake system contains a reservoir vessel (102) for holding brake medium and at least one brake circuit (107, 108), wherein the brake circuit contains, on the outlet side, first valve arrangements (112ij) and a second valve arrangement (127i, 136i) on the inlet side, wherein wheel brake cylinders (137ij) which are assigned to the brake circuit are connected to the first valve arrangements, and wherein the reservoir vessel is connected to the second valve arrangement, wherein means (205) are provided with which the wheel brake cylinder which has the greatest brake pressure is determined for the at least one brake circuit, and
wherein in the event of the brakes being activated independently of the driver the brake pressure of the wheel brake cylinder which has the greatest brake pressure is set by correspondingly actuating the second valve arrangement, and in order to set the respective brake pressure of the rest of the wheel brake cylinders of the brake circuit the first valve arrangement which is assigned to the respective wheel brake cylinder is correspondingly actuated in addition to the second valve arrangement, **characterized**

- **in that** means (206) are provided with which the respective volume demand (volumedemandij) is determined for the wheel brake cylinders which are assigned to the brake circuit, and
- **in that** the second valve arrangement is actuated at least as a function of the sum (volumedemandKn) of the individual volume demand levels, and/or in that the first valve arrangements of the rest of the wheel brake cylinders are each actuated at least as a function of the volume demand of the corresponding wheel brake cylinder, and

- **in that** the brake circuit contains a pump (111i), and in that the second valve arrangement is composed of a first valve (127i) through which brake medium flows into the brake circuit in the open position when the pump is activated, and of a second valve (136i) through which brake medium flows out of the brake circuit in the open position (124i) when the pump is activated, and
- **in that** the sum of the individual volume demand levels is compared with a comparison value, and
- **in that** if this sum is greater than or equal to the comparison value, the first valve of the second valve arrangement is actuated as a function of this sum and the second valve of the second valve arrangement is closed, and
- **in that** if this sum is smaller than the comparison value, the first valve of the second valve arrangement is closed and the second valve of the second valve arrangement is actuated as a function of this sum.

2. Device according to Claim 1, **characterized in that** the first valve arrangement is respectively composed of a first valve (113ij) and a second valve (114ij), and **in that**, for the wheel brake cylinder which has the greatest brake pressure during the activation of the brakes independently of the driver, the first valve of the first valve arrangement is switched into the open position and the second valve of the first valve arrangement is switched into the closed position.

3. Device according to Claim 1, **characterized in that** the respective volume demand of a wheel brake cylinder is determined as a function of actuation times (UventRadij), which are determined for the activation of the respective first valve arrangement which is assigned to it, and/or as a function of the brake pressure (Pij) which respectively prevails in it, and/or as a function of a brake pressure reference variable (Psollij, PminKn).

4. Device according to Claim 3, **characterized in that** as a function of the actuation times it is determined whether a brake pressure increase or a brake pressure decrease is occurring for the wheel brake cylinder, and **in that** if a brake pressure decrease is occurring a small predefinable value (PminKn) is used as the brake pressure reference variable, and **in that** the volume demand is determined by means of a first mathematical model using physical relationships, and/or
in that if a brake pressure increase is occurring a setpoint brake pressure variable (Psollij) which describes the brake pressure which is to be set by means of the control operation in the associated wheel brake cylinder is determined as the brake pressure reference variable, and **in that** the volume demand is determined by means of a second mathematical model by evaluating a characteristic curve diagram as a function of the brake pressure.

5. Device according to Claim 1, **characterized in that** a brake circuit pressure variable (Pkreisn) which describes the brake pressure which prevails in the brake circuit is determined, and
in that actuation times for the actuation of the first and second valves of the second valve arrangement are determined as a function of this brake circuit pressure variable and the sum of the volume demand levels, wherein the actuation time for the first valve is determined by means of a third mathematical model by evaluating a characteristic curve diagram as a function of the brake circuit pressure variable, and/or wherein the actuation time for the second valve is determined by means of a fourth mathematical model using physical relationships.

6. Device according to Claim 1, **characterized in that** means (204) are provided with which the number (RadKn) and/or type (KnVR) of the wheel brake cylinders of the brake circuit at which brake pressure is increased is determined as a function of actuation times for the first valve arrangements, and
in that the number and/or the type of these wheel brake cylinders is taken into account in the actuation of the first valve of the second valve arrangement.

7. Method for controlling a variable (omega) which describes the yaw rate of the vehicle, wherein the vehicle contains a brake system (100), which contains a reservoir vessel (102) for holding brake medium and at least one brake circuit (107, 108), wherein the brake circuit contains, on the outlet side, first valve arrangements (112ij) and a second valve arrangement (127i, 136i) on the inlet side, wherein wheel brake cylinders (137ij) which are assigned to the brake circuit are connected to the first valve arrangements, and wherein the reservoir vessel is connected to the second valve arrangement, wherein the wheel brake cylinder which has the greatest brake pressure is determined for the at least one brake circuit, and
wherein in the event of the brakes being activated independently of the driver the brake pressure of the wheel brake cylinder which has the greatest brake pressure is set by correspondingly actuating the second valve arrangement, and in order to set the respective brake pressure of the rest of the wheel brake cylinders of the brake circuit the first valve arrangement which is assigned to the respective wheel brake cylinder is correspondingly actuated in addition to the second valve arrangement, **characterized**

- **in that** the respective volume demand (volumedemandij) is determined for the wheel brake cylinders which are assigned to the brake circuit, and

- **in that** the second valve arrangement is actuated at least as a function of the sum (volumedemandKn) of the individual volume demand levels, and/or in that the first valve arrangements of the rest of the wheel brake cylinders are each actuated at least as a function of the volume demand of the corresponding wheel brake cylinder, and

- **in that** the brake circuit contains a pump (111i), and in that the second valve arrangement is composed of a first valve (127i) through which brake medium flows into the brake circuit in the open position when the pump is activated, and of a second valve (136i) through which brake medium flows out of the brake circuit in the open position (124i) when the pump is activated, and

- **in that** the sum of the individual volume demand levels is compared with a comparison value, and

- **in that** if this sum is greater than or equal to the comparison value, the first valve of the second valve arrangement is actuated as a function of this sum and the second valve of the second valve arrangement is closed, and

- **in that** if this sum is smaller than the comparison value, the first valve of the second valve arrangement is closed and the second valve of the second valve arrangement is actuated as a function of this sum.

8. Method according to Claim 7, **characterized in that** the first valve arrangement is respectively composed of a first valve (113ij) and a second valve (114ij), and **in that**, for the wheel brake cylinder which has the greatest brake pressure during the activation of the brakes independently of the driver, the first valve of the first valve arrangement is switched into the open position and the second valve of the first valve arrangement is switched into the closed position, and/or

**in that** the respective volume demand (volumedemandij) is determined for the wheel brake cylinders which are assigned to the brake circuit, and

**in that** the second valve arrangement is actuated as a function of the sum (volumedemandKn) of the individual volume demand levels, and/or

**in that** the first valve arrangements of the rest of the wheel brake cylinders are each actuated as a function of the volume demand of the corresponding wheel brake cylinder.


## Revendications

1. Dispositif de régulation d'une grandeur (oméga) décrivant la vitesse de lacet du véhicule, ce dispositif comprenant une installation de frein (100),

l'installation de frein comprenant un réservoir d'alimentation (102) pour recevoir un liquide de frein et au moins un circuit de frein (107, 108), le circuit de frein étant relié en sortie à des premiers dispositifs de vanne (112ij) et en entrée, à un second dispositif de vanne (127i, 136i), les premiers dispositifs de vanne étant branchés sur les cylindres de frein de roue (137ij) associés au circuit de freinage, et

le réservoir d'alimentation est relié au second dispositif de vanne,

des moyens (205) étant prévus à l'aide desquels on détermine pour au moins un circuit de frein, celui des cylindres de frein de roue qui présente la plus grande pression de frein, et

pour un actionnement de la pression de frein du cylindre de frein de roue indépendant du conducteur, qui présente la plus grande pression de frein, à l'aide d'une commande appropriée, on règle le second dispositif de vanne et pour régler la pression de frein respective du cylindre de frein de roue restant dans le circuit de frein, en plus du second dispositif de vanne, on commande de façon correspondante le premier dispositif de vanne associé au cylindre de frein de roue respectif,

**caractérisé par**

- des moyens (206) à l'aide desquels pour le cylindre de frein de roue associé au circuit de frein, on détermine la demande volumique respective (Volumenbedarfij), et

- au moins en fonction de la somme (VolumenbedarfKn), des différentes demandes volumiques, on commande le second dispositif de vanne et/ou les premiers dispositifs de vanne des cylindres de frein de roue restant sont commandés respectivement au moins en fonction de la demande volumique du cylindre de frein de roue correspondant, et

- le circuit de frein comporte une pompe (111i) et le second dispositif de vanne se compose d'une première vanne (127i) traversée en position ouverte, lors de l'actionnement de la pompe par du liquide de frein vers le circuit de frein, et

- d'une seconde vanne (136i) traversée lorsqu'elle est en position ouverte (124i) lors de l'actionnement de la pompe, par du liquide de frein sortant du circuit de frein, et

- on compare la somme des différentes demandes volumiques à une valeur de comparaison, et

- au cas où cette somme est supérieure ou égale à la valeur de comparaison, on commande la première vanne du second dispositif de vanne en fonction de cette somme et on ferme la seconde vanne du second dispositif de vanne, et

- au cas où cette somme est inférieure à la valeur de comparaison, on ferme la première vanne du second dispositif de vanne et on commande la seconde vanne du second dispositif de vanne en fonction de cette somme.

2. Dispositif selon la revendication 1,
   **caractérisé en ce que**
   le premier dispositif de vanne se compose d'une première vanne (113ij) et d'une seconde vanne (114ij) et pour le cylindre de frein de roue dans lequel règne la plus grande pression de frein, pendant l'actionnement de frein indépendamment du conducteur, la première vanne du premier dispositif de vanne est commutée en position passante et la seconde vanne du premier dispositif de vanne est commandée en position fermée.

3. Dispositif selon la revendication 1,
   **caractérisé en ce que**
   la demande volumique respective d'un cylindre de frein de roue se détermine en fonction des temps de commande (UventRadij), obtenus pour actionner le premier dispositif de vanne respectif qui lui est associé et/ou en fonction de la pression de frein (Pij) qui règne en amont et/ou en fonction d'une grandeur de référence de la pression de frein (Psollij, PminKn).

4. Dispositif selon la revendication 3,
   **caractérisé en ce qu'**
   en fonction des temps de commande, on détermine si pour les cylindres de frein de roue, il y a une augmentation ou une diminution de la pression de frein, et
   en cas de diminution de la pression de frein, on utilise comme grandeur de référence de la pression de frein, une valeur prédéfinie plus faible (PminKn) et **en ce que** la demande volumique se détermine à l'aide d'un premier modèle mathématique en utilisant des relations physiques, et/ou
   en cas de montée de la pression de frein, on utilise comme grandeur de référence de la pression de frein, une grandeur de pression de frein de consigne (Psollij) qui décrit la pression de frein qui s'établit dans le cylindre de frein de roue respectif en fonction de la régulation, et
   on détermine la demande volumique à l'aide d'un second modèle mathématique en exploitant un champ de caractéristiques en fonction de la pression de frein.

5. Dispositif selon la revendication 1,
   **caractérisé en ce qu'**
   on détermine une grandeur de pression de circuit de frein (Pkreisn), qui décrit la pression de frein régnant dans le circuit de frein, et
   en fonction de cette grandeur de pression de circuit de frein et de la somme de toutes les demandes volumiques, on détermine des durées de commande pour commander la première et la seconde vanne du second dispositif de vanne,
   le temps de commande de la première vanne se déterminant à l'aide d'un troisième modèle mathématique en exploitant un champ de courbes caractéristiques en fonction de la grandeur constituée par la pression de circuit de frein, et/ou on détermine le temps de commande de la seconde vanne à l'aide d'un quatrième modèle mathématique en utilisant des relations physiques.

6. Dispositif selon la revendication 1,
   **caractérisé par**
   des moyens (204) à l'aide desquels, en fonction des temps de commande, on détermine pour les premiers dispositifs de vanne, le nombre (RadKn) et/ou la nature (KnVR) des circuits de frein de roue du circuit de freinage pour lesquels on augmente la pression de frein, et
   on tient compte du nombre et/ou de la nature de ce cylindre de frein pour commander la première vanne du second dispositif de vanne.

7. Procédé de régulation d'une grandeur (oméga) décrivant la vitesse de lacet du véhicule,
   le véhicule comportant une installation de frein (100) avec un réservoir d'alimentation (102) recevant le liquide de frein et au moins un circuit de frein (107, 108),
   le circuit de frein étant prévu côté extérieur d'un premier dispositif de vanne (112ij) et côté entrée il est relié à un second dispositif de vanne (127i, 136i), les cylindres de frein de roue (137ij) associés au circuit de frein étant raccordés au premier dispositif de vanne, et

le réservoir d'alimentation communique avec le second dispositif de vanne, et

pour au moins un circuit de frein, on détermine le cylindre de frein de roue qui présente la pression de frein la plus élevée et en cas d'actionnement des freins indépendamment du conducteur, on règle la pression de frein du cylindre de frein de roue qui est la plus élevée, par une commande appropriée du second dispositif de vanne et servira à régler la pression de frein respective des cylindres de frein de roue restants du circuit de frein, en plus du second dispositif de vanne on commande le premier dispositif de vanne associé au cylindres de frein de roue respectif, **caractérisé en ce que**

- pour les cylindres de frein de roue associés au circuit de frein, on détermine la demande volumique respective (Volumenbedarfij), et

- au moins en fonction de la somme (VolumenbedarfKn) des différentes demandes volumiques, on commande le second dispositif de vanne et/ou on commande les premiers dispositifs de vanne des autres cylindres de frein de roue chaque fois au moins en fonction de la demande volumique du cylindre de frein de roue correspondant, et

- le circuit de frein comporte une pompe (111i) et le second dispositif de vanne se compose d'une première vanne (127i) qui en position passante est traversée par le fluide de frein allant vers le circuit de frein lors de l'actionnement de la pompe et d'une seconde vanne (136i) qui en position passante (124i) lors de l'actionnement de la pompe est traversée par du fluide sortant du circuit de frein, et

- la somme des différentes demandes volumiques est comparée à une valeur de comparaison, et

- au cas où cette somme est supérieure ou égale à la valeur de comparaison, on commande la première vanne du second dispositif de vanne en fonction de cette somme et on ferme la seconde vanne du second dispositif de vanne, et

- au cas où cette somme est inférieure à la valeur de comparaison, on ferme la première vanne du second dispositif de vanne et on commande la seconde vanne du second dispositif de vanne en fonction de cette somme.

8. Dispositif selon la revendication 7,
   **caractérisé en ce que**
   le premier dispositif de vanne se compose d'une première vanne (113ij) et d'une seconde vanne (114ij) et **en ce que** pour le cylindre de frein de roue qui présente la pression de frein la plus élevée, au cours de l'actionnement des freins indépendamment du conducteur, on commute la première vanne du premier dispositif de vanne en position passante et la seconde vanne du premier dispositif de vanne en position de blocage, et/ ou
   pour les cylindres de frein de roue associés au circuit de frein on détermine la demande volumique respective (Volumenbedarfij), et
   en fonction de la somme (VolumenbedarfKn), des différentes demandes volumiques, on commande le second dispositif de vanne et/ou
   les dispositifs de vanne des cylindres de frein de roue restants sont commandés respectivement en fonction de la demande volumique du cylindre de frein de roue correspondant.

Fig.1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4035527 A1
- US 5205623 A
- DE 19537439